Europäisches Patentamt

European Patent Office

Office européen des brevets

(11) Veröffentlichungsnummer: **0 379 601 B1**

(12) **EUROPÄISCHE PATENTSCHRIFT**

(45) Veröffentlichungstag der Patentschrift: **05.01.94**

(21) Anmeldenummer: **89101051.4**

(22) Anmeldetag: **21.01.89**

(51) Int. Cl.⁵: **H04N 7/137**, H03M 3/04

(54) **Prädiktor für digitale Videosignale in einem Differenz-Pulscodemodulator.**

(43) Veröffentlichungstag der Anmeldung:
**01.08.90 Patentblatt 90/31**

(45) Bekanntmachung des Hinweises auf die
Patenterteilung:
**05.01.94 Patentblatt 94/01**

(84) Benannte Vertragsstaaten:
**DE FR NL**

(56) Entgegenhaltungen:
**EP-A- 0 141 969**
**US-A- 4 075 655**

(73) Patentinhaber: **Deutsche ITT Industries GmbH**
**Hans-Bunte-Strasse 19**
**D-79108 Freiburg(DE)**

(72) Erfinder: **Gillies, David**
**Avenue de la Marseillaise, 20**
**FR-67000 STRASBOURG(FR)**

## Beschreibung

Die Erfindung betrifft einen Prädiktor für digitale Videosignale in einem Differenz-Pulscodemodulator. Derartige Prädiktoren finden dort Verwendung, wo die Datenbreite und damit Datenmenge redundanter Signale möglichst ohne Informationsverlust reduziert werden soll und dort, wo diese Reduzierung dann wieder rückgängig gemacht wird. Videosignale stellen derartige redundante Signale dar, da der Bildinhalt im Vergleich zur Zeilen- aber auch zur Bildabtastfrequenz im allgemeinen nur eine geringe Änderungsrate aufweist. Die Videosignale enthalten somit einen hohen Wiederholungsanteil, der mittels einer geeigneten Datenreduzierschaltung verkleinert werden kann.

Eine derartige Datenreduzierschaltung ist beispielsweise aus "Proceedings of the IEEE, Vol. 73, No. 4, April 1985, Seiten 592 bis 598, Peter Pirsch, Design of a DPCM Codec for VLSI Realization in CMOS Technology" bekannt und dient dazu, bei einer Übertragung von Videosignalen die zu übertragende Datenmenge bzw. bei einer Speicherung von Videosignalen die zu speichernde Datenmenge zu reduzieren. Bei Differenz-Pulscodemodulations-Systemen zur Übertragung von Videosignalen sind im Sender und im Empfänger gleichartige aufgebaute Prädiktoren vorgesehen. Der einfachste Prädiktor benutzt den vorangegangenen Abtastwert zur Vorhersage. Eine bessere Vorhersage kann durch zweidimensionale Prädiktoren erreicht werden, die jedoch Verzögerungsleitungen und damit viel Speicherplatz benötigen.

Diese bekannte Datenreduzierschaltung enthält senderseitig einen Subtrahierer, einen von diesem gespeisten Quantisierer, dessen Ausgang mit dem Eingang eines Codierers und dem ersten Eingang eines Addierers verbunden ist, sowie einen am Addiererausgang angeschlossenen Prädiktor, dessen Ausgang einerseits mit dem Subtrahend-Eingang des an seinem Minuend-Eingang mit den Videosignalen beaufschlagten Subtrahierers und andererseits mit dem zweiten Eingang des Addierers verbunden ist, wobei durch den Prädiktor aus den rekonstruierten Abtastwerten horizontale und vertikale Prädiktionswerte erzeugbar sind.

Aus der EP-A1-242 413 (= US-A-4 748 503) (= ITT Case P. Pirsch 4) ist eine Datenreduzierschaltung mit einem Differenz-Pulscodemodulator für Videosignale bekannt, die aufgrund ihrer Architektur mit erhöhten Taktraten betrieben werden kann, weil sie in der zeitkritischen Schleife als zu deren Rechenzeit wesentlich beitragende Teilschaltung nur noch einen Subtrahierer, einen Quantisierer und einen Verzögerer enthält.

In der EP-A 141 969 sind ein Verfahren und eine Schaltungsanordnung zur Verbesserung der Bildqualität durch aktivitätsgesteuerte DPCM-Codierung beschrieben. Bei dem bekannten Verfahren werden bei kleinen Unterschieden zwischen aufeinanderfolgenden Fernsehhalbbildern die Schätzwerte oder Vorhersagewerte allein aus dem vorangegangenen Fernsehhalbbild ermittelt. Bei größeren Intensitätsunterschieden benachbarter Bildsignalwerte des aktuellen und des vorangegangenen Fernsehhalbbildes erfolgt jedoch die Berechnung des Schätzwertes oder Prädiktionswertes sowohl aus dem vorangegangenen als auch aus dem aktuellen Fernsehhalbbild. Bei sehr großen Intensitätsunterschieden zwischen aufeinanderfolgenden Fernsehhalbbildern erfolgt die Berechnung des Prädiktionswertes allein aus dem aktuellen Fernsehhalbbild.

Der EP-A2-104 470 (US-A 45 41 102) kann ein schneller DPCM-Codierer entnommen werden, der mit einer Recheneinheit zum Ermitteln des Schätzwertes versehen ist und bei dem drei Subtrahierer dem Quantisierer vorgeschaltet sind, weshalb der Quantisierer mehrere Ausgänge aufweist. Die US-A-40 75 655 beschreibt ebenfalls eine Datenreduzierschaltung der eingangs genannten Art mit mehreren Prädiktoren in der Gestalt von speziellen Filtern.

Weiterer Stand der Technik bezüglich einer Datenreduzierschaltung für digitale Videosignale ist aus der EP-A-0 016 048 (= WO 88/00207) bekannt. Die Prädiktoren dieser Schaltungsanordnung bearbeiten nicht nur Abtastwerte innerhalb einer gleichen Zeile, sondern berücksichtigen auch die Abtastwerte vorhergehender Zeilen und/oder vorhergehender Halbbilder..

Schließlich wird noch auf die EP-A2-181 237 verwiesen, in der eine Datenreduzierschaltung für Fernsehkonferenzen beschrieben ist, die mit einer adaptiven Prädiktorschaltung versehen ist, deren Schaltkreise nicht nur Abtastwerte eines Halbbildes, sondern auch Abtastwerte verschiedener Halbbilder und zum Hintergrund gehörende Abtastwerte verarbeitet.

Bei den bekannten DPCM-Systemen werden vom Prädiktor horizontale und vertikale Komponenten verarbeitet. Zur Auswertung der vertikalen Komponenten muß bei einem einfachen System wenigstens eine Bildzeile speicherbar sein, was wegen des erforderlichen Speicherplatzes bei einer integrierten Schaltung die Chipgröße wesentlich beeinflußt.

Ausgehend von dem oben erörterten Stand der Technik liegt der Erfindung die Aufgabe zugrunde, einen Prädiktor für eine Datenreduzierschaltung der eingangs genannten Art zu schaffen, der sich auf einer möglichst kleinen Chipfläche realisieren läßt, ohne daß sich die Bildqualität dadurch störend verschlechtert.

Diese Aufgabe wird erfindungsgemäß dadurch gelöst, daß der Prädiktor eine Rechenschaltung aufweist, durch die aus den rekonstruierten Abtastwerten einer jeden Zeile ein einziger für die gesamt nachfolgende Zeile gültiger vertikaler Prädiktionswert erzeugbar ist, der über einen zweiten Addierer mit der Vielzahl der horizontalen Prädiktionswerte verknüpfbar ist.

Bei einem vorteilhaften Ausführungsbeispiel der Erfindung verfügt die Rechenschaltung über einen Akkumulator, der zu Beginn einer Zeile gelöscht wird und durch den alle einer Zeile zugeordneten Abtastwerte saldierbar sind. Am Ende einer Zeile wird mit Hilfe einer in einem Festwertspeicher abgespeicherten Tabelle ein vertikaler Prädiktionswert bestimmt und in einem Register zur Verwendung in der nachfolgenden Zeile gespeichert. Der vertikale Prädiktionswert wird mit einem in üblicher Weise bestimmten horizontalen Prädiktionswert mit Hilfe des weiteren Addierers verknüpft und als Schätzwert oder Prädiktionswert dem Subtrahend-Eingang des dem Quantisierer vorgeschalteten Subtrahierers zugeführt.

Bei einem besonders einfachen Ausführungsbeispiel enthält der Festwertspeicher eine Tabelle, die es gestattet, am Ende einer Zeile aus dem Akkumulatorinhalt den Durchschnittswert oder mittleren Wert der Abtastwerte zu bestimmen und als vertikalen Prädiktionswert zu verwenden. Gemäß einer Ausgestaltung der Erfindung enthält der Festwertspeicher eine Tabelle, welche die Tatsache berücksichtigt, daß der größte Teil der Abtastwerte in typischen Bildern Signalwerte aufweist, die um typische Signalniveaus gehäuft sind, beispielsweise bei Luminanzsignalen um mittlere Grauwerte.

Dadurch, daß bereits Tabellen mit zum Beispiel 16 Ausgangsgrößen für eine akzeptable Bildqualität ausreichen ergibt sich eine erhebliche Einsparung an Speicherplatz und gleichzeitig eine höhere Bildqualität gegenüber einfachen PCM-Systemen mit der gleichen Bandbreite oder Datenrate.

Nachfolgend wird die Erfindung anhand der Figuren der Zeichnung näher beschrieben. Es zeigen:

Fig. 1 ein Blockschaltbild eines bekannten DPCM-Systems mit einem Sender und einem Empfänger, die jeweils über gleichartig aufgebaute Prädiktoren verfügen und

Fig. 2 den in Fig. 1 dargestellten Sender mit einem erfindungsgemäß aufgebauten Prädiktor.

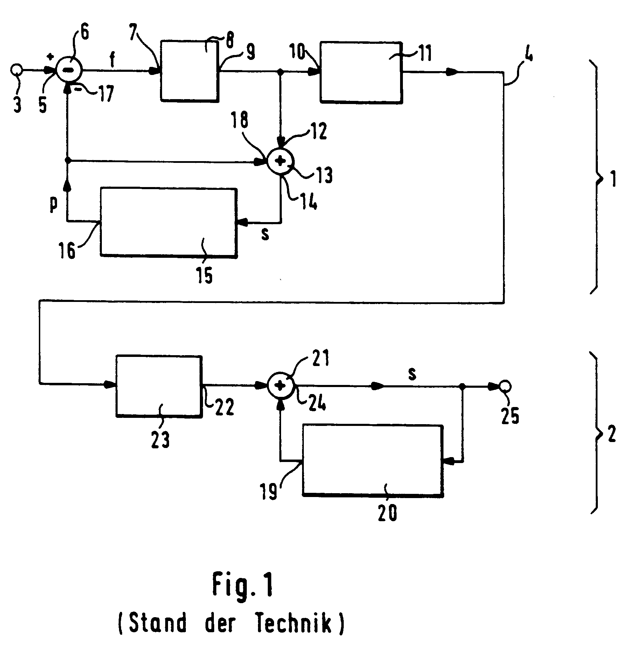

Das in Fig. 1 im Blockschaltbild dargestellte DPCM-System verfügt über einen Sender 1 und einen Empfänger 2. Am Eingang 3 des Senders 1 liegt eine Folge digitaler Videosignale an, die im Takt eines Taktsignals digitalisiert sind, und die aktuelle Eingangs-Abtastwerte in Gestalt von PCM-Signalwerten darstellen. Die Abtastwerte bestehen beispielsweise aus Datenwörtern von jeweils 8 Bit, deren Stellenzahl von 8 Bit auf beispielsweise 4 Bit reduziert werden soll, um sie über die Datenleitung 4 zum Empfänger 2 zu übertragen. Die Reduzierung der Bitrate des Videosignals wird dabei durch Anwendung der Differenz-Pulscodemodulation (DPCM) erreicht. Die dazu erforderlichen Komponenten werden nachfolgend beschrieben.

Der Eingang 3 des Senders 1 ist mit dem Minuend-Eingang 5 eines Subtrahierers 6 verbunden, dessen Ausgangssignal den Eingang 7 eines Quantisierers 8 speist. Der Quantisierer 8 enthält z.B. einen Festwertspeicher mit einer Quantisiertabelle für 16 Werte und führt eine nichtlineare Quantisierung der am Eingang 7 anliegenden Datenworte durch.

Der Ausgang 9 des Quantisierers 8 ist einerseits mit dem Eingang 10 eines Codierers 11 und andererseits mit dem ersten Eingang 12 eines Addierers 13 verbunden. Der Ausgang 14 des Addierers 13 liefert die Eingangssignale für einen Prädiktor 15, der eine Recheneinheit zur Ermittlung von Schätzwerten, Vorhersagewerten oder Prädiktionswerte darstellt. Der Prädiktor 15 kann auch als digitales Filter mit speziellen Eigenschaften aufgefaßt werden.

Die am Prädiktorausgang 16 auftretenden Prädiktionswerte p speisen den Subtrahend-Eingang 17 des Subtrahierers 6 und den zweiten Eingang 18 des Addierers 13. Bei der DPCM-Codierung erfolgt eine Reduzierung der am Eingang 3 anliegenden Bitrate des Videosignals dadurch, daß die beschriebenen Komponenten durch nichtlineare Quantisierung und nachfolgende Codierung DPCM-Signalwerte erzeugen, die im wesentlichen nur den Signaländerungen zugeordnet sind.

Aus dem am Eingang 3 anliegenden aktuellen Eingangs-Abtastwerten wird nach einer Subtraktion des vom Prädiktionsausgang 16 gelieferten Prädiktionswertes vom Eingangs-Abtastwert ein Prädiktionsfehler f gebildet, der im Quantisierer 8 quantisiert und für die Übertragung mit Hilfe des Codierers 11 codiert wird. Im Empfänger 2 geschieht mit Hilfe des Addierers 21 die Rekonstruktion durch Addition des am Prädiktionsausgang 19 des empfangsseitigen Prädiktors 20 auftretenden Prädiktionswertes zum quantisierten Prädiktionsfehler, der am Decodiererausgang 22 des Decodierers 23 vorliegt. Um gleiche Prädiktionswerte zu erhalten, basiert die Vorhersage der beiden Prädiktoren 15 und 20 auf rekonstruierten Abtastwerten s, die senderseitig am Ausgang 14 des Addierers 13 bzw. empfängerseitig am Ausgang 24 des Addierers 21 und damit am Empfängerausgang 25 vorliegen.

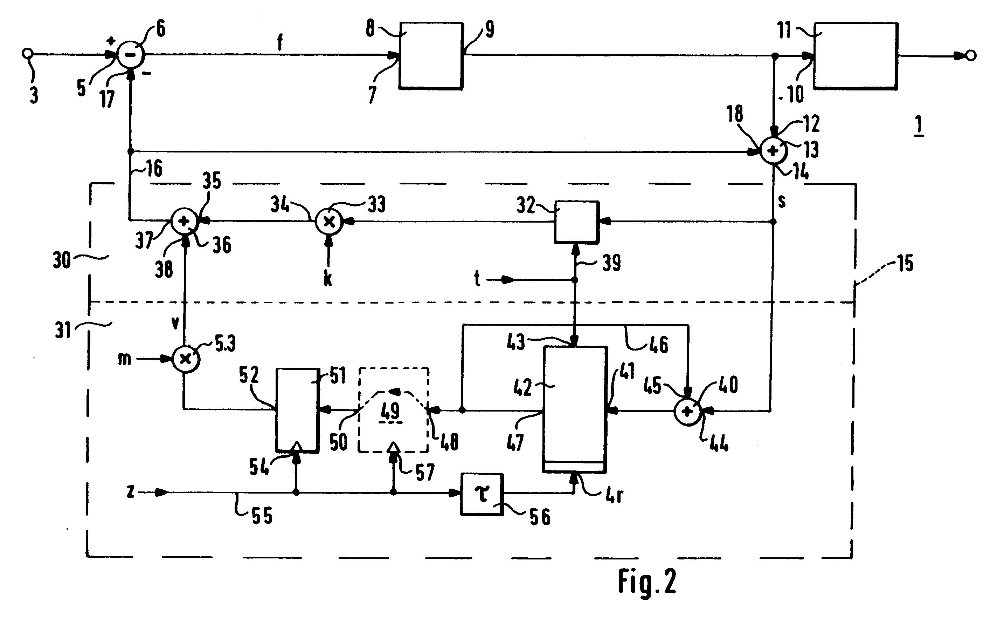

Die Fig. 2 zeigt den Sender 1 mit dem detaillierter dargestellten erfindungsgemäßen Prädiktor 15 des Senders 1, dessen Aufbau dem Prädiktor 20 des Empfängers 2 entspricht. Die Eingangs-Abtastwerte, die eine Folge digitaler Videosignale darstellen, gelangen über den Eingang 3 zum Subtrahierer 6, der infolge der Differenzbildung zwischen den Eingangs-Abtastwerten und den vom Prädiktor 15 gelieferten Prädiktionswerten p im Takt der Eingangs-Abtastwerte die Prädiktionsfehler f zum Eingang 7 des Quantisierers 8 liefert, der z.B. eine Quantisierfunktion mit 16 Niveaus enthält. Die quantisierten Prädiktionsfehler oder quantisierten DPCM-Signalwerte gelangen einerseits zum Codierer 11 und andererseits zum ersten Eingang 12 des Addierers 13, dem ersten Addierer, der über seinen zweiten Eingang 18 mit den vom Prädiktor 15 gelieferten Prädiktionswerten beaufschlagt ist.

Der Prädiktor 15 besteht aus einem Horizontalprädiktor 30 und einem Vertikalprädiktor 31.

Der Horizontalprädiktor 30 enthält in an sich bekannter Weise ein Verzögerungsglied 32, dem ein erster Multiplizierer 33 nachgeordnet ist, durch den eine Verkleinerung der Abtastwerte erfolgt, bevor diese dem ersten Eingang 35 eines zweiten Addierers 36 als horizontale Prädiktionwerte h zugeführt werden. Mittels des ersten Multiplizierers 33 ist dabei der horizontale Prädiktionsfaktor k realisiert, der im beschriebenen Beispiel 0,5 ist. Dieser Wert ist als Zweierpotenz besonders leicht realisierbar, schließt andere Werte jedoch nicht aus.

Am Ausgang 37 des zweiten Addierers 36 liegt als Prädiktionswert p die Summe des über den ersten Eingang 35 eingespeisten horizontalen Prädiktionswertes h und des über den zweiten Eingang 38 eingekoppelten vertikalen Prädiktonswertes v an. Die Schaltung zur Erzeugung des vertikalen Prädiktionswertes, d.h. die Schaltung des Vertikalprädiktors 31 wird nachfolgend beschrieben.

Der Ausgang 14 des ersten Addierers 13 ist nicht nur mit dem über eine Taktleitung 39 mit Taktimpulsen t versorgten Verzögerungsglied 32, sondern auch über einen dritten Addierer 40 mit dem Eingang 41 eines Akkumulators 42 verbunden. Der Akkumulator 42 verfügt über einen Takteingang 43, der ebenfalls über die Taktleitung 39 mit den Taktimpulsen aus einer in der Zeichnung nicht dargestellten Taktschaltung versorgt wird, so daß nach jedem Taktimpuls der vom Akkumulator 42 gebildete Saldo um den Betrag erhöht wird, der dem am Ausgang 14 des Addierers 13 anliegenden rekonstruierten Abtastwert s entspricht, der dem ersten Eingang 44 des dritten Addierers 40 zugeführt wird. Der zweite Eingang 45 des dritten Addierers 40 ist über eine Rückkopplungsleitung 46 mit dem Ausgang 47 des Akkumulators 42 verbunden. Die Verzögerungszeit im Verzögerungsglied 32 beträgt ein Abtasttakt, also wird der unmittelbar vorausgehende Bildpunkt für den horizontalen Prädiktionswert h ausgewertet. Der Akkumulator 42 weist einen Rücksetzeingang 4r auf, durch den bei einem Zeilenwechsel, d.h. am Ende jeder Zeile bzw. am oder vor dem Anfang der nächsten Zeile ein Löschen des Akkumulatorinhaltes erfolgt. Auf diese Weise saldiert der Akkumulator 42 vom Anfang bis zum Ende einer Zeile laufend die Abtastwerte. Der jeweilige Saldenwert wird während einer Zeile in einem Register 51 gespeichert und steht als Datenwort während dieser Zeile der weiteren Signalverarbeitung zur Verfügung.

Der Saldo der Abtastwerte am Ausgang 47 kann in einer weiteren, besonders vorteilhaften Ausführungsvariante - Fig. 2 zeigt dies - den Adresseneinang 48 eines Festwertspeichers 49 speisen, der eine Tabelle enthält, die gemäß einer von diversen Zuordnungsfunktionen erstellt worden ist. Am Ausgang 50 des Festwertspeichers 49, der einen Quantisierer darstellt, liegt in Abhängigkeit vom Signal am Adresseneingang 48 beispielsweise einer von 16 möglichen Werten an. Am Ende einer Zeile wird das am Ausgang 50 des Festwertspeichers 49 vorhandene dem Akkumulatorsaldo zugeordnete Datenwort im Register 51 als vertikaler Prädiktionswert übernommen. Der Ausgang 52 des Registers 51 ist über den zweiten Multipizierer 53 an den zweiten Eingang 38 des zweiten Addierers 36 angeschlossen .

Das Register 51 und der Festwertspeicher 49 verfügen jeweils über einen Übernahmeeingang 54 bzw. 57, die über eine Zeilenleitung 55 im Zeitraum zwischen dem Ende einer Zeile und dem Anfang der nächsten Zeile mit einem Zeilenstartsignal z beaufschlagt sind. Dieses Signal wird über ein Verzögerungselement 56 auch dem Rücksetzeingang 4r des Akkumulators 42 zugeführt, so daß kurz nach der Übernahme des vertikalen Prädiktionswertes in das Register 51 der Akkumulator 42 rechtzeitig vor Beginn der nächsten Zeile gelöscht wird, um die zur Erzeugung der vertikalen Prädiktionswerte für die übernächste Zeile erforderliche Saldierung der rekonstruierten Abtastwerte zu beginnen. Eine Skalierung oder Gewichtung der vertikalen Prädiktionswerte erfolgt durch den zweiten Multiplizierer 53, der dem Register 51 vor- oder nachgeschaltet sein kann. Mittels des zweiten Multiplizierers 53 ist dabei der vertikale Prädiktionsfaktor m einstellbar, wobei $m = 1-k$ ist und besonders vorteilhaft als Zweierpotenzwert durch Stellenverschiebung realisierbar ist.

Die im Festwertspeicher 49 abgelegte Tabelle ist im einfachsten Fall gemäß einer Zuordnungfunktion erstellt, durch die aus dem am Ausgang 47 des Akkumulators 42 anliegenden Abtastwertsaldo ein Mittelwert oder Durchschnittswert der rekonstruierten Abtastwerte bestimmt wird. Eine derartige Tabelle läßt sich einer Grauwertgeraden zuordnen , die es gestattet, für einen Akkumulatorsaldo den jeweiligen Durchschnittswert der saldierten Datenworte zu bestimmen. Im einfachsten Fall stellt der vertikale Prädiktionswert somit den mittleren Grauwert der vorhergehenden Zeile dar. Dieser konstante Grauwert läßt sich mit wenig Chipfläche einnehmenden Komponenten in der oben beschriebenen Weise ermitteln.

Bei einer etwas komplexeren Zuordnungsfunktion wird berücksichtigt, daß die meisten Abtastwerte in typischen Bildern um gewisse Signalniveaus gehäuft sind, zum Beispiel um die mittleren Grauwerte eines Luminanzsignals. Dies führt dazu, daß die Tabellenwerte, die bei dem oben beschriebenen Ausführungsbeispiel durch eine Gerade beschreibbar sind, durch solche ersetzt werden, die einer S-Kurve entsprechen. Da im Festwertspeicher 49 nur eine begrenzte Anzahl von Tabellenwerten gespeichert sind, ist es selbstverständlich, daß die Gerade bzw. die S-Kurve treppenförmig verläuft. Andere Kurvenformen als die beschriebene Gerade oder S-Kurve sind ebenfalls in Abhängigkeit von den erwarteten statistischen Daten der zu verarbeitenden Videobilder möglich. Je nach dem Kurvenverlauf erfolgt eine Betonung oder eine Dämpfung der den Luminanzsignalen zugeordneten Graustufen - beispielsweise eine Betonung im mittleren Grauwertbereich bzw. eine Dämpfung im extremen Hell- und Dunkelbereich.

Der Festwertspeicher 49 oder der Akkumulator 42 bewirken durch entprechende Stellenverschiebung ferner auch die Skalierung des im Akkumulator 42 gebildeten Saldenwertes. Hierzu kann selbstverständlich auch der zweite Multiplizierer 53 dienen, wenn der Skalierungsfaktor und der vertikale Prädiktionsfaktor zu einem einzigen Faktor zusammengezogen werden.

Eine andere Möglichkeit, die in Fig. 2 jedoch nicht dargestellt ist, besteht darin, die rekonstruierten Abtastwerte s, die dem dritten Addierer 40 zugeführt werden, zuvor über einen Quantisierer, ähnlich dem Festwertspeicher 49 zu leiten, damit bereits bei der Saldierung eine unterschiedliche Bewertung der von einem mittleren Grauwert abweichenden Signale bewirkt werden kann. Der nachfolgende Festwertspeicher 49 kann dann entfallen.

**Patentansprüche**

1.  Prädiktor (15, 20) für digitale Videosignale in einem Differenz-Pulscodemodulator, wobei das Ausgangssignal des Prädiktors (15, 20) über einen ersten Addierer (13, 21) auf den Eingang des Prädiktors (15, 20) zurückgekoppelt ist und wobei durch den Prädiktor (15, 20) aus rekonstruierten Abtastwerten (s), die am Ausgang des ersten Addierers (13, 21) abzugreifen sind, horizontale und vertikale Prädiktionswerte (h, v) erzeugbar sind,
dadurch gekennzeichnet, daß
der Prädiktor (15, 20) eine Rechenschaltung aufweist, durch die aus den rekonstruierten Abtastwerten (s) einer jeden Zeile ein einziger für die gesamte nachfolgende Zeile gültiger vertikaler Prädiktionswert (v) erzeugbar ist und durch die mittels eines zweiten Addierers (36) der vertikale Prädiktionswert (v) mit der Vielzahl der horizontalen Prädiktionswerte (h) einer jeden Zeile zu einer Vielzahl von aufeinanderfolgenden Prädiktionswerten (p) verknüpft sind.

2.  Prädiktor (15, 20) nach Anspruch 1, dadurch gekennzeichnet, daß die Rechenschaltung einen zeilenperiodisch löschbaren Akkumulator (42) zum Saldieren der rekonstruierten Abtastwerte (s) einer Zeile aufweist, dessen Ausgang (47) mit dem Eingang eines Registers (51) gekoppelt ist, das den Saldenwert der vorausgehenden Zeile speichert und der weiteren Signalverarbeitung als Datenwort zur Verfügung stellt.

3.  Prädiktor (15, 20) nach Anspruch 2, dadurch gekennzeichnet, daß zwischen dem Akkumulator (42) und dem Register (51) ein Festwertspeicher (49) eingefügt ist, der als Zuordnungsschaltung eine Quantisierungstabelle aufweist, die das jeweilige Ausgangssignal des Akkumulators (42) einer begrenzten Anzahl von Festwerten zuordnet, deren jeweiliger Wert als Datenwort dem Register (51) zugeführt ist.

4.  Prädiktor (15, 20) nach Anspruch 2, dadurch gekennzeichnet, daß der Übernahmeeingang (54) des Registers (51) und der Rücksetzeingang (4r) des Akkumulators (42) an ein Zeilenstartsignal (z) angeschlossen sind.

5.  Prädiktor (15, 20) nach Anspruch 3, dadurch gekennzeichnet, daß der Festwertspeicher (49) eine Tabelle mit einer begrenzten Anzahl von Werten enthält. die einer Grauwertgeraden zugeordnet sind.

6.  Prädiktor (15, 20) nach Anspruch 3, dadurch gekennzeichnet, daß der Festwertspeicher (49) eine Tabelle mit einer begrenzten Anzahl von Werten enthält, die einer Grauwertkurve mit S-Kurvenverlauf zugeordnet sind.

7.  Prädiktor (15, 20) nach Anspruch 3, dadurch gekennzeichnet, daß die zugeordneten Werte im Festwertspeicher (49) nach der üblichen Häufigkeitsverteilung der Grauwertstufen derart bestimmt sind, daß im Bereich hoher Häufigkeit die zugeordneten Werte weniger dicht beisammen liegen als im Bereich geringer Häufigkeit.

8.  Prädiktor (15, 20) nach Anspruch 1 , gekennzeichnet durch folgende Merkmale:

- der dem zweiten Addierer (36) zugeführte horizontale Prädiktionswert (h) ist mittels eines ersten Multiplizierers (33), dem ein horizontaler Prädiktionsfaktor (k) zugeführt ist, gewichtet und
- der dem zweiten Addierer (36) zugeführte vertikale Prädiktionswert (v) ist mittels eines zweiten Multiplizierers (53), dem ein vertikaler Prädiktionsfaktor m zugeführt ist, gewichtet,
- wobei die beiden Prädiktionsfaktoren k, m über die Beziehungsgleichung k + m = 1 miteinander verknüpft sind.

9. Prädiktor nach Anspruch 3, dadurch gekennzeichnet, daß die rekonstruierten Abtastwerte (s), die dem dritten Addierer (40) zugeführt sind, zuvor über einen Quantisierer ähnlich dem Festwertspeicher (49) geführt sind und daß der nachgeschaltet Festwertspeicher (49) entfällt.

## Claims

1. Predictor (15, 20) for digital video signals in a differential pulse code modulator wherein the output of the predictor (15, 20) is fed through a first adder (13, 21) back to the input of the predictor (15, 20), and wherein horizontal and vertical prediction values (h, v) can be derived from reconstructed sample values (s) provided at the output of the first adder (13, 21), <u>characterized in that</u> the predictor (15, 20) includes a calculating circuit which is capable of deriving from the reconstructed sample values (s) of each line a single vertical prediction value (v) which is valid for the entire next line, and combines, by means of a second adder (36), the vertical prediction value (v) with the plurality of horizontal prediction values (h) of each line to form a plurality of successive prediction values (p).

2. A predictor (15, 20) as claimed in claim 1, characterized in that the calculating circuit includes an accumulator (42) for accumulating the reconstructed sample values (s) of a line, said accumulator being resettable after each line period and having its output (47) coupled to the input of a register (51) which stores the sum value of the previous line and makes it available as a data word for further signal processing.

3. A predictor (15, 20) as claimed in claim 2, characterized in that a read-only memory (49) is inserted between the accumulator (42) and the register (51) and contains a quantizing table as an assignment circuit which assigns the respective output signal from the accumulator (42) to a limited number of fixed values each of which is fed as a data word to the register (51).

4. A predictor (15, 20) as claimed in claim 2, characterized in that the enable input (54) of the register (51) and the reset input (4r) of the accumulator (42) are connected to a line start signal (z).

5. A predictor (15, 20) as claimed in claim 3, characterized in that the read-only memory (49) contains a table with a limited number of values which are assigned to a straight-line gray-value curve.

6. A predictor (15, 20) as claimed in claim 3, characterized in that the read-only memory (49) contains a table with a limited number of values which are assigned to a gray-value curve having an S-shape.

7. A predictor (15, 20) as claimed in claim 3, characterized in that the assigned values in the read-only memory (49) are so determined according to the common frequency distribution of the gray levels that in the range of high frequency, the assigned values are less close together than in the range of low frequency.

8. A predictor (15, 20) as claimed in claim 1, characterized by the following features:
   - The horizontal prediction value (h) supplied to the second adder (36) is weighted by means of a first multiplier (33) fed with a horizontal prediction factor k, and
   - the vertical prediction value (v) supplied to the second adder (36) is weighted by means of a second multiplier (53) fed with a vertical prediction factor m,
     -- the two prediction factors k, m being linked by the relation k + m = 1.

9. A predictor as claimed in claim 3, characterized in that the reconstructed sample values (s) are passed through a quantizer similar to the read-only memory (49) before being supplied to the third adder (40), and that the subsequent read-only memory (49) is omitted.

## Revendications

1. Prédicteur (15, 20) pour signaux numériques vidéographiques dans un modulateur différentiel à impulsions codées, dans lequel le signal de sortie du prédicteur (15, 20) est ramené par l'intermédiaire d'un premier additionneur (13, 21) à l'entrée du prédicteur (15, 20) et dans lequel des valeurs de prédiction horizontale et verticale (h, v) peuvent être produites par le prédicteur (15, 20) à partir de valeurs de balayage reconstituées (s) qui sont à prélever à la sortie du premier additionneur (13, 21),

caractérisé en ce que

le prédicteur (15, 20) présente un circuit de calcul au moyen duquel, à partir des valeurs de balayage reconstituées (s) de chaque ligne, une valeur unique de prédiction verticale (v) valable pour l'ensemble des lignes consécutives peut être produite et au moyen duquel, grâce à un deuxième additionneur (36), la valeur de prédiction verticale (v) et la pluralité de valeurs de prédiction horizontales (h) de chaque ligne sont associées à une pluralité de valeurs de prédiction consécutives (p).

2. Prédicteur (15, 20) selon la revendication 1, caractérisé en ce que le circuit de calcul comprend un accumulateur (42) effaçable à la cadence des lignes pour totaliser les valeurs de balayage reconstituées (s) d'une ligne, dont la sortie (47) est reliée à l'entrée d'un registre (51) qui stocke la valeur de total de la ligne précédente et la met à la disposition comme mot de données pour un traitement ultérieur de signal.

3. Prédicteur (15, 20) selon la revendication 2, caractérisé en ce qu'entre l'accumulateur (42) et le registre (51) une mémoire de valeurs fixes (49) est intercalée qui présente comme circuit d'affectation une table de quantification qui affecte chaque signal de sortie de l'accumulateur (42) à un nombre limité de valeurs fixes dont la valeur correspondante est envoyée comme mot de données au registre (51).

4. Prédicteur (15, 20) selon la revendication 2, caractérisé en ce que l'entrée de réception (54) du registre (51) et l'entrée de réinitialisation (4r) de l'accumulateur (42) sont reliées à un signal de début de ligne (z).

5. Prédicteur (15, 20) selon la revendication 3, caractérisé en ce que la mémoire de valeurs fixes (49) comprend une table avec un nombre limité de valeurs qui sont affectées à une échelle linéaire de gris.

6. Prédicteur (15, 20) selon la revendication 3, caractérisé en ce que la mémoire de valeurs fixes (49) comprend une table avec un nombre limité de valeurs qui sont affectées à une courbe de valeurs de gris en forme de S.

7. Prédicteur (15, 20) selon la revendication 3, caractérisé en ce que les valeurs stockées dans la mémoire de valeurs fixes (49) sont déterminées d'après la distribution habituelle de fréquence des niveaux de gris, de sorte que dans le domaine de fréquence élevée les valeurs affectées sont moins resserrées que celles dans le domaine d'une fréquence moindre.

8. Prédicteur (15, 20) selon la revendication 1, caractérisé en ce que
   - la valeur de prédiction horizontale (h) envoyée au deuxième additionneur (36) est pondérée au moyen d'un premier multiplieur (33) auquel est envoyé un facteur de prédiction horizontale (k),
   - la valeur de prédiction verticale (v) envoyée au deuxième additionneur (36) est pondérée au moyen d'un deuxième multiplieur (53) auquel est envoyé un facteur de prédiction verticale (m)

   et dans lequel les deux facteurs de prédiction (k, m) sont liés l'un à l'autre par la relation k + m = 1.

9. Prédicteur (15, 20) selon la revendication 3, caractérisé en ce que les valeurs de balayage reconstituées (s) qui sont envoyées au troisième additionneur (40) sont envoyées préalablement, par l'intermédiaire d'un quantificateur, à un dispositif analogue à la mémoire de valeurs fixes (49) et que la mémoire de valeurs fixes (49) branchée en aval est supprimée.

Fig.1
(Stand der Technik)

Fig.2

EP 0 379 601 B1